# EUROPEAN PATENT SPECIFICATION

(11) **EP 2 837 992 B1**
(45) Date of publication and mention of the grant of the patent: **21.09.2016**
(21) Application number: 13799887.8
(22) Date of filing: 04.06.2013
(51) Int. Cl.: G06F 3/0488

(54) **USER INTERFACE INTERACTION METHOD AND APPARATUS APPLIED IN TOUCHSCREEN DEVICE, AND TOUCHSCREEN DEVICE**
BENUTZERSCHNITTSTELLENINTERAKTIONSVERFAHREN UND -VORRICHTUNG IN BERÜHRUNGSBILDSCHIRMVORRICHTUNG SOWIE BERÜHRUNGSBILDSCHIRMVORRICHTUNG
PROCÉDÉ ET APPAREIL D'INTERACTION AVEC UNE INTERFACE UTILISATEUR, APPLIQUÉS À UN DISPOSITIF À ÉCRAN TACTILE, ET DISPOSITIF À ÉCRAN TACTILE

(30) Priority: 05.06.2012 CN 201210184210
(43) Date of publication of application: 18.02.2015
(73) Proprietor: Xiaomi Inc., Beijing 100085 (CN)
(72) Inventor: LIU, Jing, Beijing 100085 (CN); WU, Xiaojun, Beijing 100085 (CN); SHEN, Yang, Beijing 100085 (CN); GUO, Yu, Beijing 100085 (CN)
(74) Representative: Hanna, Peter William Derek
(86) International application number: PCT/CN2013/076701
(87) International publication number: WO 2013/182034

(56) References cited:
- CN-A- 101 390 033
- CN-A- 101 946 228
- CN-A- 102 799 347
- US-A1- 2007 216 659

## Description

The present invention generally relates to the field of touchscreen technology, and more particularly, to a method and a device for user interface interaction applied to a touchscreen apparatus and a touchscreen apparatus.

### BACKGROUND

With the development of wireless communication technology and touchscreen technology, more and more electronic equipment adopt the touchscreen technology, such as touchscreen cellphones and tablet PCs and so on, and become hand-held terminals frequently used by users.

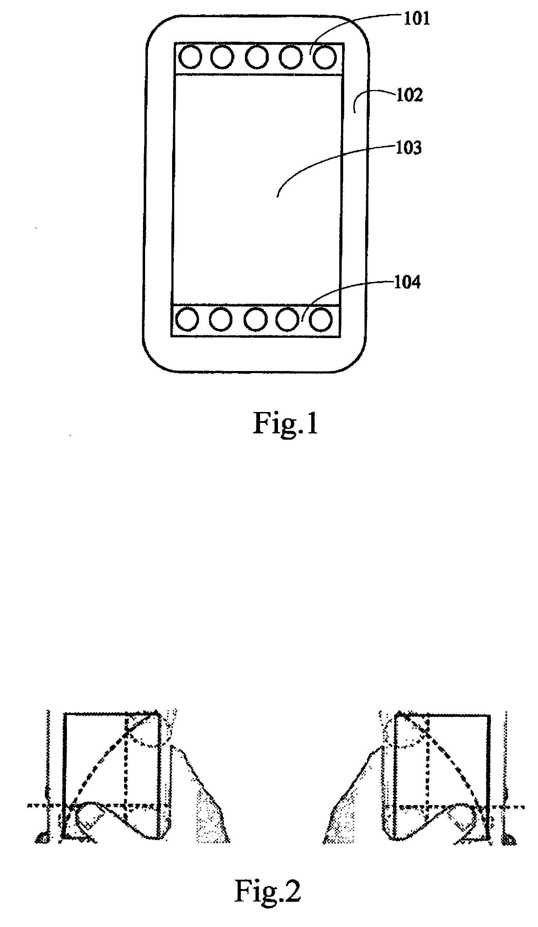

On user interfaces of the touchscreen apparatuses in the prior art, user operation points are mostly fixed on certain locations. As shown in Fig. 1, taking the touchscreen cellphone for example, it is generally divided into the top touch area and buttons 101, the cellphone supporting part 102, the touchable screen 103 and the bottom touch area and buttons 104. As can be seen from Fig. 1, user touchable areas of the conventional touchscreen cellphones are mainly featured by several fixed buttons respectively provided at the top and bottom screen areas of the touchscreen cellphones for the users touch operations, and the touch areas are generally rectangular.

The US patent publication US-A-2007/02116659 discloses a method for user interface interaction applied to a touchscreen apparatus in which the functions of two or more single-function buttons are combined on a user interface of the touchscreen apparatus into one multifunction button and wherein said one multifunction button is displayed in unfolded manner when a real-time touch operation time performed by a user on the multifunction button exceeds a threshold.

The inventor has found in the research that as most users use one thumb to operate the touchscreen apparatus, as shown in Fig. 2, if the screen of the touchscreen apparatus is too large, it will be inconvenient for the user to operate the touchscreen apparatus, which will increase unnecessary user action interaction times on the touchscreen apparatus and thus degrade the performance of the touchscreen apparatus.

### SUMMARY

The technical problem sought to be solved by the present invention is to provide a method as defined in independent claim 1 and device as defined in independent claim 9 for touchscreen user interface interaction.

Further embodiments of the invention are specified in the appended dependent claims.

As can be seen from the above-described technical solution, by combining the single-function buttons into one multifunction button, the users may not need to consider distribution locations of the various single-function buttons in the prior art during the operation, instead, they only need to operate the multifunction button. Moreover, as the various combined single-function buttons are unfolded only around the multifunction button, the users may also control the screen range on which the single-function buttons that need to be operated are unfolded by moving the multifunction button, which makes it convenient for the users to operate the various single-function buttons on the touchscreen apparatus. Furthermore, with convenient operation, it will not increase operation times on the touchscreen and thus will reduce the wear of the touchscreen of the touchscreen apparatus during the users' operation.

### BRIEF DESCRIPTION OF THE DRAWINGS

In order to more clearly explain the technical solutions in the embodiments of the present application or in the prior art, hereinafter, the brief introduction to the drawings required to be used in the depiction of the embodiments or the prior art will be given. It is apparent that the following drawings only illustrate some of the embodiments recorded in the present application, and those skilled in the art could obtain other drawings based on these drawings without inventive labor.
Fig. 1 is a diagram illustrating a user interface of a touchscreen apparatus in the prior art;
Fig. 2 is a diagram illustrating a user operation area of a touchscreen apparatus in the prior art;
Fig. 3 is a flow chart showing a first embodiment of a first method of the present invention;
Fig. 4 is a diagram illustrating a location of a multifunction button in a first embodiment of a first method of the present invention;
Fig. 5 is a flow chart of a step 302 in a first embodiment of a first method of the present invention;
Fig. 6 is a flow chart showing an example of a step 302 in a first embodiment of a first method of the present invention;
Fig. 7 is a diagram illustrating a user interface when a plurality of single-function buttons are unfolded on a user interface of an embodiment of the present invention;
Fig. 8 is a flow chart showing a second embodiment of a first method of the present invention;
Figs. 9 and 10 are diagrams illustrating unfolded single-function buttons when a docking location of a multifunction button is respectively on the left side and right side of a user interface;
Fig. 11 is a flow chart showing a third embodiment of a first method of the present invention;
Fig. 12 is a flow chart showing an embodiment of a second method of the present invention;
Fig. 13 is a structure diagram illustrating a first embodiment of a first device of the present invention;
Fig. 14 is a structure diagram illustrating a first determination module 1103 in a first embodiment of a first device of the present invention;
Fig. 15 is a structure diagram illustrating an interaction module 1304 in a first embodiment of a first device of the present invention;
Fig. 16 is a structure diagram illustrating a second embodiment of a first device of the present invention;
Fig. 17 is a structure diagram illustrating a third embodiment of a first device of the present invention; and
Fig. 18 is a structure diagram illustrating an embodiment of a second device of the present invention.

### DETAILED DESCRIPTION

In order to achieve the inventive object of the present invention, the present invention provides a method and a device for user interface interaction applied to a touchscreen apparatus and a corresponding touchscreen apparatus. The method combines in advance two or more single-function buttons on a user interface of the touchscreen apparatus into one multifunction button, and unfolds the previously combined two or more single-function buttons around the multifunction button when a user touches the multifunction button. Because only one multifunction button exists and its location is fixed, and all the buttons may be unfolded around the multifunction button at the bottom side of the touchscreen apparatus, it will be convenient for the user to operate the touchscreen apparatus.

The above contents are core ideas of the present invention, and in order to make those skilled in the art understand the solutions of the present invention better, the technical solutions in the embodiments of the present invention will be clearly and completely described hereinafter in conjunction with the accompanying drawings in the embodiments of the present invention. All other embodiments acquired by those skilled in the art without inventive labor based on the embodiments of the present invention shall fall into the protection scope of the present invention, as claimed.

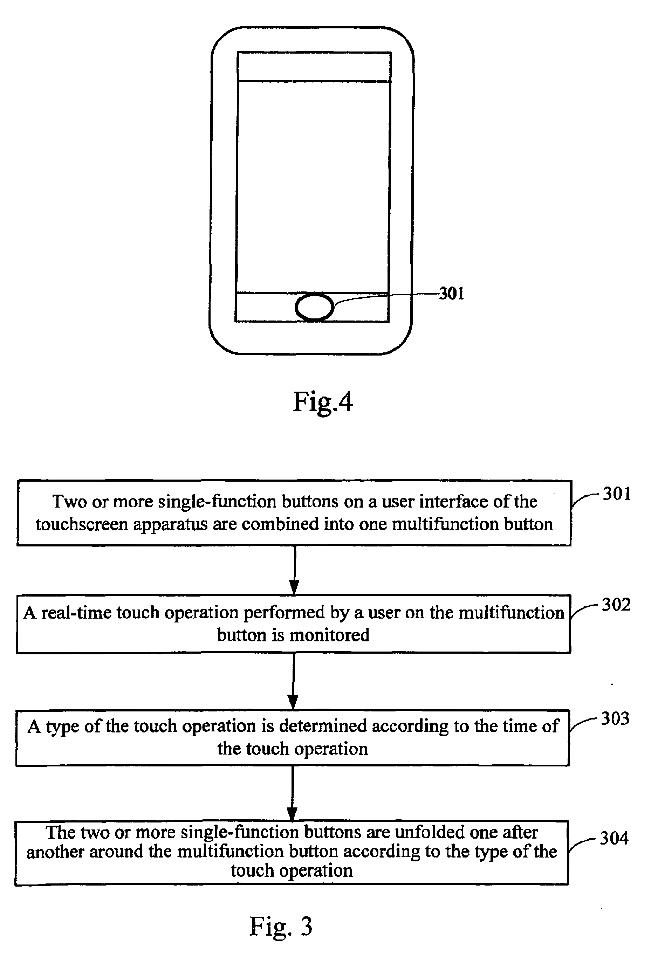

In an embodiment of the present invention, for convenience of description, a touchscreen cellphone is described as an example of the touchscreen apparatus. However, when the embodiment of the present invention is applied to other touchscreen apparatuses such as tablet PCs, the implementation thereof is similar to the embodiment of the present invention. Fig. 3 shows a flow chart of a first embodiment of a first method for user interface interaction applied to a touchscreen apparatus of the present invention. The method may include the following steps.

In step 301, two or more single-function buttons on a user interface of the touchscreen apparatus are combined into one multifunction button.

When the embodiment of the present invention is implemented, it needs to combine a plurality of single-function buttons on the user interface of the touchscreen apparatus into one multifunction button at first. For example, the single-function buttons at the top or bottom of the touchscreen apparatus are combined into one multifunction button, a default location of the multifunction button may be predefined to be at a central location of the bottom of the touchscreen apparatus. Fig. 4 is a diagram illustrating an example of the location of the multifunction button of the embodiment of the present embodiment.

In step 302, a real-time touch operation performed by a user on the multifunction button is monitored.

In this step, it needs to detect in real time whether the user performs the touch operation on the multifunction button, if the user performs the touch operation, a timer needs to be subsequently started to detect a length of time of the touch operation performed by the user on the multifunction button.

In step 303, a type of the touch operation is determined according to the time of the touch operation.

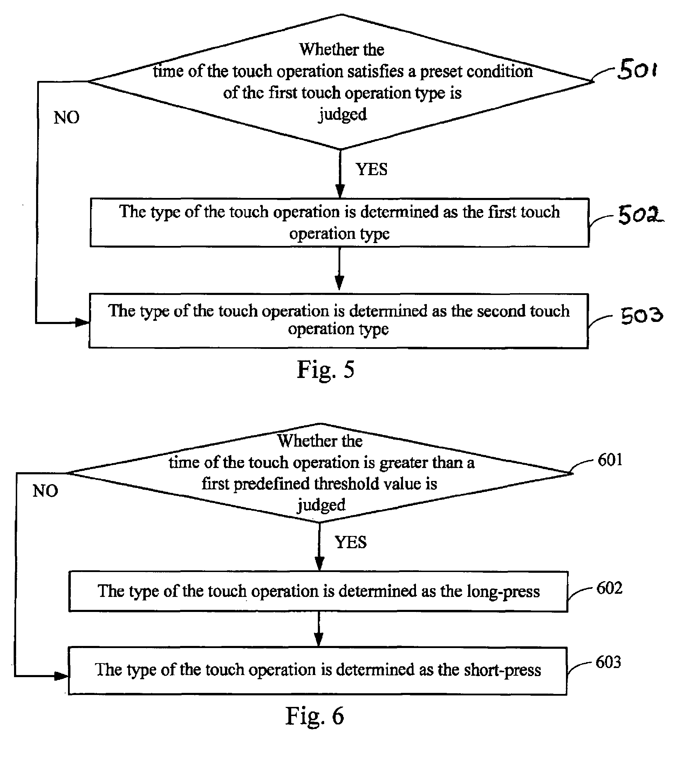

In practical application, because the user may perform an operation on the multifunction button by a long-press, a short-press or a double-click in practical use, there may be several types of touch operations in this step. For example, a first touch operation type is set as a short-press, a second touch operation type is set as a long-press, a third touch operation type is set as a double-click, and a fourth touch operation type is set as another type of touch operation. Because in practical application, common operations are the long-press and the short-press, the types of the touch operation including the first touch operation type and the second touch operation type are described for example. Referring to Fig. 5, this step needs to include the following steps.

In step 501, whether the time of the touch operation satisfies a preset condition of the first touch operation type is judged, if it does, it proceeds to step 502; and if not, it proceeds to step 503.

It is judged at first whether the time of the touch operation satisfies the preset condition of the first touch operation type. In practical application, a corresponding preset condition may be set according to whether the first touch operation type is the long-press or the short-press.

In step 502, the type of the touch operation is determined as the first touch operation type.

If the time of the touch operation satisfies time of the first touch operation type, the type of the touch operation is determined as the first touch operation type.

In step 503, the type of the touch operation is determined as the second touch operation type.

If the time of the touch operation does not satisfy the time of the first touch operation type, the type of the touch operation is determined as the second touch operation type. It is to be explained that this example is only illustrated when two types of touch operations exist. In practical use, those skilled in the art could adaptively adjust and change the above steps according to the number of the types of touch operations.

In order to facilitate those skilled in the art to understand the implementation of this step in more detail, the case where the first touch operation type is the short-press and the second touch operation type is the long-press is described hereinafter for example. As shown in Fig. 6, in practical application, the step 302 may specifically include:
In step 601, whether the time of the touch operation is greater than a first predefined threshold value is judged, if it is, it proceeds to step 602; and if not, it proceeds to step 603.

A first threshold value needs to be predefined at first, and the first threshold value serves as a dividing point to distinguish whether the touch operation performed by the user is the long-press or the short-press. Under normal circumstances, the first threshold value may be set to be 0.8 seconds. When this step is implemented, a touch Began event (i.e., the beginning of a touch operation) and a touch Ended event (i.e., the end of the touch operation) of the UIView (i.e., the user interface) may be monitored such that the timer is started when the touch Began event is triggered and the timer is stopped when the touch Ended event is triggered, and operation time obtained by the timer is the time of the touch operation.

In step 602, the type of the touch operation is determined as the long-press.

When the time of the touch operation is longer than 0.8 seconds, the type of the touch operation performed by the user is determined as the long-press.

In step 603, the type of the touch operation is determined as the short-press.

When the time of the touch operation is shorter than 0.8 seconds, the type of the touch operation performed by the user is determined as the short-press.

It is to be explained that when the time of the touch operation is equal to 0.8 seconds, the type of the touch operation may be determined as the long-press or the short-press according to the actual situation, or may be set by the user.

As a further, the two or more single-function buttons are unfolded one after another around the multifunction button according to the type of the touch operation.

In this step, it specifically needs to unfold the two or more single-function buttons one after another around the multifunction button according to the type of the touch operation. It is to be explained that unfolding manners may be different if the types of the touch operation are different. For example, when the type of the touch operation is the first touch operation type, the two or more single-function buttons are directly unfolded one after another in a user touch area around the multifunction button; and when the type of the touch operation is the second touch operation type, a docking location of the multifunction button is adjusted at first according to a movement operation performed by the user on the multifunction button, and then the two or more single-function buttons are unfolded one after another in the user touch area around the docking location after the multifunction button is moved.

It will be appreciated that in practical application, there may be such examples that when the user short-presses the multifunction button (at this time, the first touch operation type is the short-press), the combined single-function buttons may be unfolded one after another into an arc around the multifunction button; and when the user long-presses * button (at this time, the second touch operation type is the long-press), the docking location of the multifunction button is detected after the multifunction button is dragged by the user, and then according to the final docking location, the combined single-function buttons may be unfolded one after another around the final docking location of the multifunction button. The case where the user long-presses the multifunction button will be introduced in detail in the second embodiment and the third embodiment, and is not be described repeatedly herein.

It is to be explained that in view of the user's using habits or aesthetic consideration, when the user short-presses the multifunction button, the two or more single-function buttons may be evenly unfolded into an arc according to a preset radius around the multifunction button, wherein distances between any two neighbouring single-function buttons of the two or more single-function buttons are equal and distances from the two or more single-function buttons to the multifunction button are equal. Moreover, when the user long-presses the multifunction button, the two or more single-function buttons are evenly unfolded into an arc according to a preset radius in the user touch area around the docking location of the multifunction button, wherein distances between any two neighbouring single-function buttons of the two or more single-function buttons are equal and distances from the two or more single-function buttons to the multifunction button are equal.

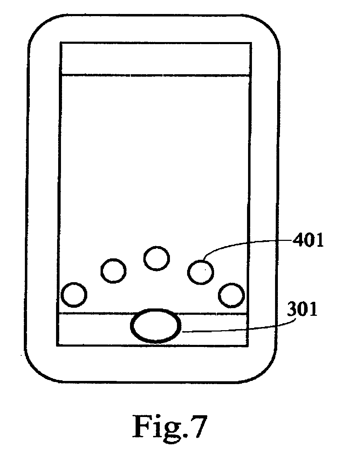

Fig. 7 is a diagram illustrating a user interface when a plurality of single-function buttons are unfolded on a user interface. Fig. 7 illustrates five single-function buttons, and distances between any two neighbouring single-function buttons 401 are equal and distances from the multifunction button 301 to the respective single-function buttons 401 are equal. It is to be explained that Fig. 7 is only an example in which the single-function buttons are evenly unfolded, the single-function buttons may also be arbitrarily unfolded around the multifunction button without limiting the distribution of the respective single-function buttons, as long as the user can see these single-function buttons.

In the present embodiment, a diameter of the unfolded single-function buttons may be 1/2 to 2/3 of a diameter of the multifunction button. However, the sizes of the single-function buttons as well as the multifunction button may be set by the user, the present embodiment is only described for illustration. In addition, the number of the single-function buttons and whether backgrounds or words exist when the single-function buttons are unfolded may be defined by the user. It is to be explained that when the number of the unfolded single-function buttons exceeds a maximum number of single-function buttons that can be displayed on the screen of the touchscreen apparatus, the number may be set according to the location where the current multifunction button is located. For example, when the multifunction button is on the left or right side, the number of the single-function buttons is no more than 6, and further when the number of the single-function buttons is equal to or exceeds 6, only 5 of the single-function buttons are displayed and the last button is a "show more" button. When the user touches the "show more" button, an action sheet may pop up for the user to choose more actions. When the multifunction button is in the middle of the bottom of the screen, the number of the buttons may be generally set to be no more than 11 and when the number of the buttons is equal to or exceeds 11, only 10 of the buttons may be displayed, the last button is a "show more" button, and when the user touches the "show more" button, an action sheet may also pop up for the user to choose more actions.

It will be appreciated that in practical use, the user may also set the multifunction button as a semitransparent button, which can achieve the effect of the embodiment of the present invention without affecting a display frame of the screen of the touchscreen apparatus.

In the present embodiment, after the single-function buttons are combined into one multifunction button with the above manner, the users do not have to consider distribution locations of the various single-function buttons in the prior art during the operation, instead, they only need to operate the multifunction button. Moreover, as the various combined single-function buttons are unfolded only around the multifunction button, the users may also control the screen range on which the single-function buttons that need to be operated are unfolded by moving the multifunction button, which makes it convenient for the users to operate the various single-function buttons on the touchscreen apparatus. Furthermore, with convenient operation, it will not increase operation times on the touchscreen and thus will reduce the wear of the touchscreen of the touchscreen apparatus during the users' operation.

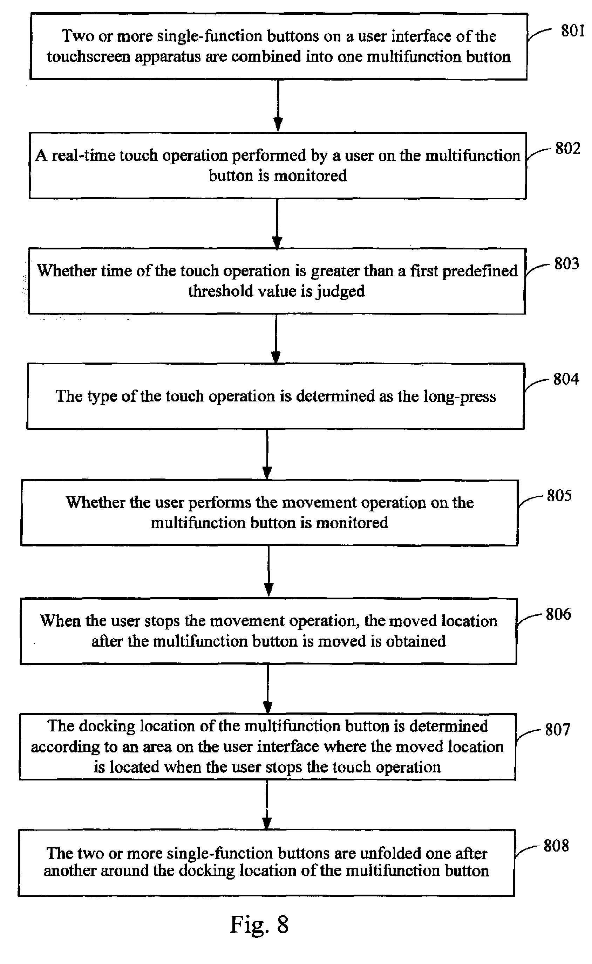

Fig. 8 shows a flow chart showing a second embodiment of a first method for user interface interaction applied to a touchscreen apparatus of the present invention. In the present embodiment, the type of the touch operation is divided into a first touch operation type and a second touch operation type, wherein the second touch operation type is described to be the long-press, and the present embodiment may include the following steps.

In step 801, two or more single-function buttons on a user interface of the touchscreen apparatus are combined into one multifunction button.

In step 802, a real-time touch operation performed by a user on the multifunction button is monitored.

Because the implementations of the step 801 and the step 802 are similar to those of the first embodiment, so it will not be described repeatedly herein.

In step 803, whether time of the touch operation is greater than a first predefined threshold value is judged.

If the time of the touch operation performed by the user is greater than the first predefined threshold value, the type of the touch operation performed by the user may be determined as the long-press.

In step 804, the type of the touch operation is determined as the long-press.

After the type of the touch operation is determined as the long-press, a docking location of the multifunction button needs to be adjusted according to a movement operation performed by the user on the multifunction button, wherein step 805 to step 807 specifically illustrate how the docking location of the multifunction button is adjusted according to the movement operation performed by the user on the multifunction button.

In step 805, whether the user performs the movement operation on the multifunction button is monitored, if the user does, it proceeds to step 806.

In this step, it also needs to monitor whether the user performs the movement operation on the multifunction button when the user long-presses the multifunction button, if the user performs the movement operation, then a moved location of the multifunction button is changed.

In step 806, when the user stops the movement operation, the moved location after the multifunction button is moved is obtained.

In this step, when the user stops the movement operation, the current moved location of the multifunction button after the multifunction button is moved by the user is obtained. Because in practical use, the user may move the multifunction button on the whole screen of the touchscreen apparatus at will, the current location needs to be monitored when the user stops the movement operation.

In step 807, the docking location of the multifunction button is determined according to an area on the user interface where the moved location is located when the user stops the touch operation.

If the user also stops the touch operation on the multifunction button after stopping the movement operation, at this time, the docking location of the multifunction button needs to be determined according to the moved location that is determined in the step 806. Under normal circumstances, when the user stops dragging the multifunction button with a finger, the location of the multifunction button may not just stop right at the docking location of the multifunction button. At this time, whether the multifunction button needs to be docked on the left side, in the middle or on the right side of the user interface is determined according to whether the moved location is on the left side, in the middle or on the right side of the moved location.

In step 808, the two or more single-function buttons are unfolded one after another around the docking location of the multifunction button.

After the multifunction button is determined, the two or more single-function buttons may be unfolded one after another around the docking location of the multifunction button. For example, the two or more single-function buttons are evenly unfolded into an arc according to a preset radius around the multifunction button, wherein distances between any two neighbouring single-function buttons of the two or more single-function buttons are equal and distances from the two or more single-function buttons to the multifunction button are equal.

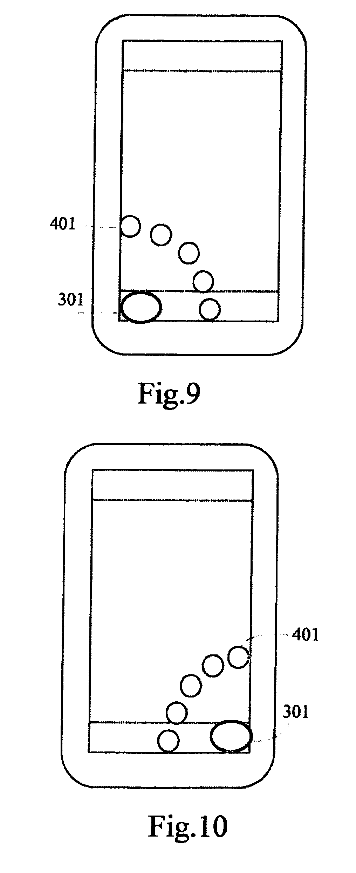

Fig. 9 is a diagram illustrating the various unfolded single-function buttons when the docking location of the multifunction button is on the left side of the user interface. Fig. 10 is a diagram illustrating the various unfolded single-function buttons when the docking location of the multifunction button is on the right side of the user interface. As can be seen, after the single-function buttons are unfolded, the single-function buttons are evenly divided by an angle on an arc with a diameter of 1/2 of a height of the screen of the touchscreen apparatus taking the multifunction button as the center. When the multifunction button is respectively on the left or right side of the bottom of the screen, the various single-function buttons are evenly divided on a 90-degree arc, and when the multifunction button is in the middle of the screen, the various single-function buttons are evenly divided on a 180-degree arc when the single-function buttons are formed into an arc. It is to be explained that the diameter of the arc formed by unfolding the single-function buttons may also be 1/3 of the height of the screen of the touchscreen apparatus, or may be other numerical values, which may be predefined by the user.

It is to be explained that when the multifunction button is specifically implemented, the multifunction button may be disposed at any location on the screen of the touchscreen apparatus, and the unfolding way of the single-function buttons may also includes various unfolding ways such as being unfolded vertically or horizontally. The diagram of unfolding in the embodiment of the present invention is only for illustration, and should not be construed as all the implementation manners of the embodiments of the present invention.

In the present embodiment, the user may move the multifunction button to the left side, the middle or the right side of the bottom of the screen by long-pressing the multifunction button, such that the user may unfold the single-function buttons in a range convenient for the user to operate, which not only increases the utilization rate of the screen of the touchscreen apparatus but also improves user experience.

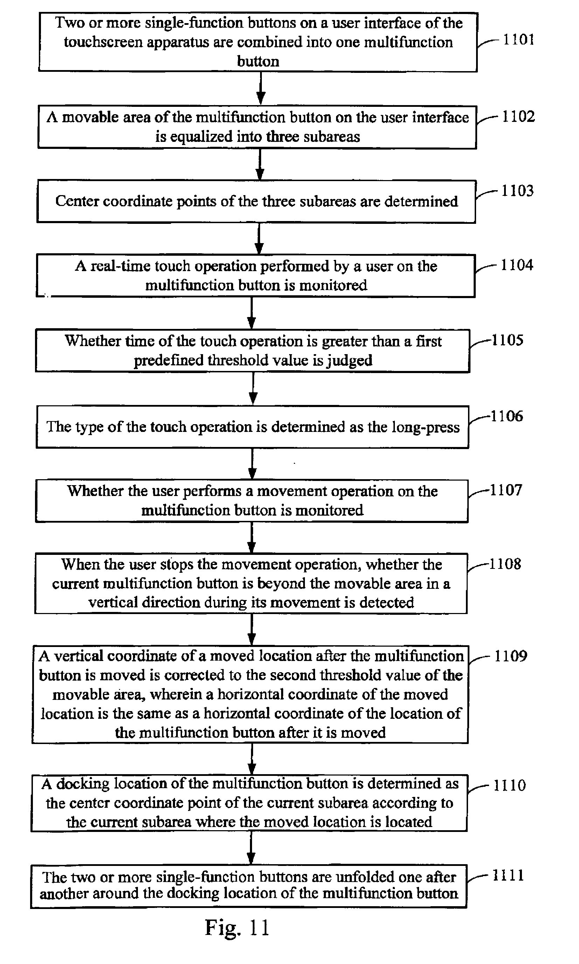

Fig. 11 shows a flow chart of a third embodiment of a first method for user interface interaction applied to a touchscreen apparatus of the present application. In the present embodiment, a touch operation type is divided into a first touch operation type and a second touch operation type, wherein the second touch operation type is described to be a long-press, and the method may include the following steps.

In step 1101, two or more single-function buttons on a user interface of the touchscreen apparatus are combined into one multifunction button.

In step 1102, a movable area of the multifunction button on the user interface is equalized into three subareas, wherein the movable area is a horizontal area located at the bottom of the touchscreen apparatus and a height of the horizontal area is a second preset threshold value.

In the present embodiment, it is assumed that the movable area of the multifunction button is a horizontal area located at the bottom of the touchscreen apparatus and a height of the horizontal area is a second preset threshold value. The second threshold value herein may be modified according to the size of the multifunction button and may be generally fixed at the bottom of the touchscreen of the entire touchscreen apparatus, namely, an area with a horizontal line of the bottom of the screen as width and having a height of 44 pixels above the bottom of the screen is called the movable area of the multifunction button. The movable area is equalized into three subareas A (left side), B (middle) and C (right side).

In step 1103, center coordinate points of the three subareas are determined.

Coordinates of center points of the three subareas are respectively obtained as three final locations where the multifunction button is respectively docked in the three subareas : a (the center coordinate of subarea A), b (the center coordinate of subarea B) and c (the center coordinate of subarea C).

In step 1104, a real-time touch operation performed by a user on the multifunction button is monitored.

In step 1105, whether time of the touch operation is greater than a first predefined threshold value is judged.

In step 1106, the type of the touch operation is determined as the long-press.

In step 1107, whether the user performs a movement operation on the multifunction button is monitored, if the user does, it proceeds to step 1108.

In step 1108, when the user stops the movement operation, whether the current multifunction button is beyond the movable area in a vertical direction during its movement is detected, if it is, it proceeds to step 1109.

Under normal circumstances, because the user may move the multifunction button on the screen at will, when the user stops the movement operation, it needs to detect whether the multifunction button is beyond the movable area in the vertical direction, and if it is beyond the movable area, the location of the multifunction button needs to be automatically corrected in the follow-up.

In step 1109, a vertical coordinate of a moved location after the multifunction button is moved is corrected to the second threshold value of the movable area, wherein a horizontal coordinate of the moved location is the same as a horizontal coordinate of the location of the multifunction button after it is moved.

In practical use, because the location of the multifunction button will not just stop right at a, b or c when the user stops dragging the multifunction button, it needs to check which area of A, B or C the coordinate of the multifunction button is in, and a final docking point of the multifunction button may be determined as the center coordinate point of the current area. Specifically, when the coordinate of the multifunction button is not beyond the movable area, the center coordinate of the multifunction button is the coordinate of the current moved location of the multifunction button; and when the coordinate of the multifunction button is beyond the movable area, the X value in the horizontal direction of the center coordinate of the multifunction button may be kept the same as the X value of the current moved location, but the Y value in the vertical direction is a Y value obtained by mapping the moved location of the multifunction button on an upper boundary of the movable area. Based on this rule, automatically correcting a deviation that the multifunction button goes beyond its movable range may be realized when the user long-presses and moves the multifunction button. That is to say, when the multifunction button is moved at the bottom of the touchscreen apparatus, its movement direction depends on a direction in which the multifunction button is moved on the horizontal line, and its movement distance depends on a straight-line distance that is moved by the multifunction button in the horizontal direction.

It is to be explained that the horizontal and vertical directions specified in the embodiment of the present invention are relative to the horizontal line of the bottom when the touchscreen apparatus is placed in a forward direction.

In step 1110, a docking location of the multifunction button is determined as the center coordinate point of the current subarea according to the current subarea where the moved location is located.

It is assumed that the current subarea where the moved location of the multifunction button is located is the subarea A, the docking location of the multifunction button is determined as the point a.

In step 1111, the two or more single-function buttons are unfolded one after another around the docking location of the multifunction button.

It is to be explained that when the single-function buttons are unfolded in this step, three sets of corresponding animations may be provided with respect to the docking location of the multifunction button and each set of animations may include the movement of the locations of the single-function buttons, the angle rotation of the single-function buttons and the dissolving effect of the single-function buttons. Each single-function button corresponds to an animation path from a starting location to an ending location, and the animation path may be accompanied by the spinning effect of the single-function buttons. A simple animation may also be used to present the process that the multifunction button is moved from the moved location of the user to the docking location, the length of time may be limited to 0.2 seconds. It will be appreciated that in the animation process, the multifunction button does not respond to the touch operation of the user, and the multifunction button continues to respond to the touch operation of the user when the animation is completely played.

It is to be explained that the unfolded single-function buttons will have a starting location and an ending location when the multifunction button is at different locations, the starting location of each single-function button is fixed by using the center coordinate of the multifunction button as a starting point, and the ending location is referred to the aforementioned arc arrangement manner. The animations of the single-function buttons are the combination of the animations of every single-function button from the starting location to the ending location. The animations mainly consist of two parts including the movement of the locations and the spinning of the single-function buttons. The animations may be set to be equally split in time, i.e., contents of the animations are evenly distributed in time, and the spinning starts when the single-function button is moved to a midpoint of the starting location and the spinning ends when the single-function button reaches the ending point. The animations of the single-function buttons may also be set as the animation style that supports customized definition, for example, a self-defined animation in IOS is an Animation Group object.

It will be appreciated that play time of the animations of the single-function buttons may be set as 0.5 seconds, and the interval of time at which the animation of each single-function button starts is 0.1 second, or it may be set to ensure finishing the complete animations of all the single-function buttons within 1 second so as to not affect user experience while making it convenient for the user to operation.

The specific numerical values in the embodiments of the present invention are examples made for easy understanding by those skilled in the art. Those skilled in the art may choose other numerical values by themselves without inventive labor.

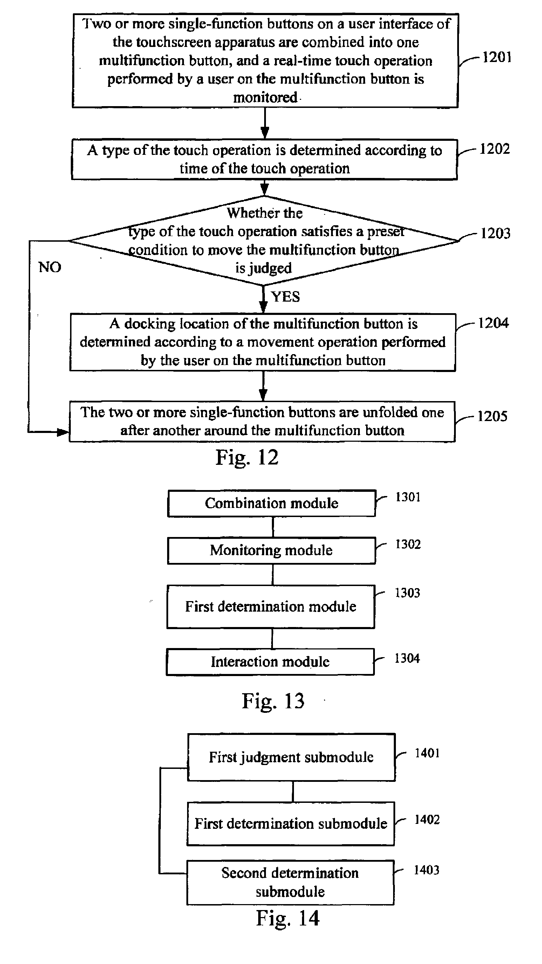

An embodiment of the present invention further provides a second method for user interface interaction applied to a touchscreen apparatus. As shown in Fig. 12, the present embodiment may specifically include the following steps.

In step 1201, two or more single-function buttons on a user interface of the touchscreen apparatus are combined into one multifunction button, and a real-time touch operation performed by a user on the multifunction button is monitored.

In step 1202, a type of the touch operation is determined according to time of the touch operation.

In the present embodiment, the implementations of the step 1201 and the step 1202 may refer to the first embodiment, the second embodiment and the third embodiment of the first method for the user interface interaction applied to the touchscreen apparatus as described above.

In step 1203, whether the type of the touch operation satisfies a preset condition to move the multifunction button is judged, if it does, it proceeds to step 1204; and if not, it proceeds to step 1205.

In this step, different from the first method for the user interface interaction applied to the touchscreen apparatus, it needs to judge whether the type of the touch operation satisfies the preset condition to move the multifunction button. For example, when the type of the touch operation is the long-press, it is deemed that the preset condition to move the multifunction button is satisfied. However, those skilled in the art may change the preset condition according to the actual scene. For example, when the user double-clicks the multifunction button, it is deemed that the preset condition to move the multifunction button is satisfied.

In step 1204, a docking location of the multifunction button is determined according to a movement operation performed by the user on the multifunction button.

If the preset condition to move the multifunction button is satisfied, it needs to determine the final docking location of the multifunction button according to the movement operation performed by the user on the multifunction button. The process of how to determine the docking location may refer to the second embodiment and the third embodiment of the first method for the user interface interaction applied to the touchscreen apparatus, which will not be described repeatedly herein.

In step 1205, the two or more single-function buttons are unfolded one after another around the multifunction button.

If the preset condition to move the multifunction button is not satisfied, the two or more single-function buttons are directly unfolded one after another around the multifunction button. It is to be explained that the implementations of the steps motioned in the present embodiment may refer to those in the first embodiment, the second embodiment and the third embodiment of the first method for the user interface interaction applied to the touchscreen apparatus, which will not be described repeatedly herein.

Through the above description of the method embodiments, those skilled in the art may clearly understand that the present invention may be implemented by software working with necessary common hardware platform, or may be implemented by hardware, and in most cases, the former is a better embodiment. Based on this understanding, the technical solution of the present invention in substance or the portion that contributes to the prior art may be embodied in a form of software product, the computer software product is stored in a storage medium and includes a number of instructions to enable a computer apparatus (which may be a personal computer, a server, or a network device, etc.) to carry out all or part of the steps of the methods of the various embodiments of the present invention. The storage medium includes various kinds of media that may store program codes, such as a read only memory (ROM), a random access memory (RAM), a magnetic disk or an optical disk and so on.

Corresponding to the above method embodiments, an embodiment of the present invention further provides a first device for user interface interaction applied to a touchscreen apparatus. Fig. 13 shows a structure diagram of a first embodiment of a first device for user interface interaction applied to a touchscreen apparatus, the device may include:
a combination module 1301 configured to combine two or more single-function buttons on a user interface of the touchscreen apparatus into one multifunction button;
a monitoring module 1302 configured to monitor a real-time touch operation performed by a user on the multifunction button;
a first determination module 1303 configured to determine a type of the touch operation according to time of the touch operation.

In practical application, the type of the touch operation may specifically include a first touch operation type and a second touch operation type. As shown in Fig. 14, the first determination module 1303 may specifically include:
a first judgment submodule 1401 configured to judge whether the time of the touch operation satisfies a preset condition of the first touch operation type;
the first touch operation type is a short-press, the second touch operation type is a long-press, and the first judgment submodule is specifically configured to
judge whether the time of the touch operation is greater than a first predefined threshold value;
a first determination submodule 1402 configured to determine the type of the touch operation as the first touch operation type when a result of the judgment submodule is yes;
a second determination submodule 1403 configured to determine the type of the touch operation as the second touch operation type when the result of the judgment submodule is no.

An interaction module 1304 is configured to unfold the two or more single-function buttons one after another around the multifunction button according to the type of the touch operation.

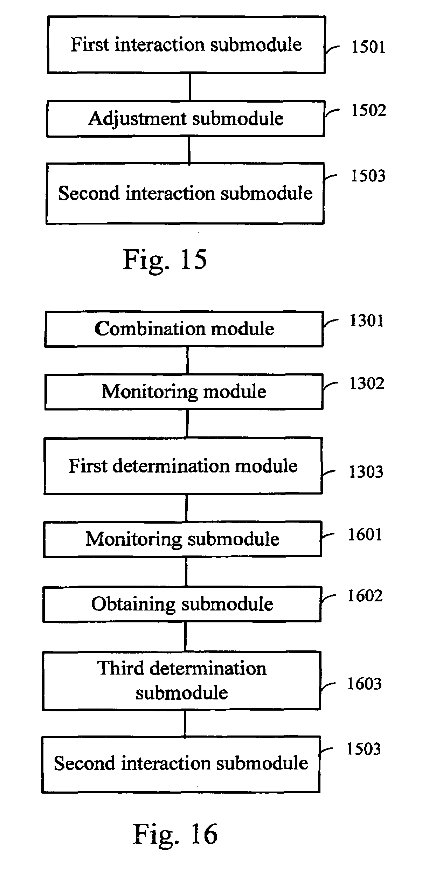

As shown in Fig. 15, the interaction module 1304 may specifically include a first interaction submodule 1501, an adjustment submodule 1502 and a second interaction submodule 1503.

The first interaction submodule 1501 is configured to unfold the two or more single-function buttons one after another in a user touch area around the multifunction button, when the type of the touch operation is the first touch operation type.

The first interaction submodule 1501 may be specifically configured to evenly unfold the two or more single-function buttons into an arc according to a preset radius around the multifunction button, wherein distances between any two neighbouring single-function buttons of the two or more single-function buttons are equal and distances from the two or more single-function buttons to the multifunction button are equal.

The adjustment submodule 1502 is configured to adjust a docking location of the multifunction button according to a movement operation performed by the user on the multifunction button, when the type of the touch operation is the second touch operation type.

The second interaction submodule 1503 is configured to unfold the two or more single-function buttons one after another in the user touch area around the docking location after the multifunction button is moved.

In the present embodiment, when the users operate the touchscreen apparatus including the above device, the users may not need to consider distribution locations of the various single-function buttons in the prior art, instead, they only need to operate the multifunction button. Moreover, as the various combined single-function buttons are unfolded only around the multifunction button, the users may also control the screen range on which the single-function buttons that need to be operated are unfolded by moving the multifunction button, which makes it convenient for the users to operate the various single-function buttons on the touchscreen apparatus. Furthermore, with convenient operation, it will not increase operation times on the touchscreen and thus will reduce the wear of the touchscreen of the touchscreen apparatus during the users' operation.

Fig. 16 shows a structure diagram of a second embodiment of a first device for user interface interaction applied to a touchscreen apparatus, a type of a touch operation is divided into a first touch operation type and a second touch operation type, wherein the second touch operation type is described to be a long-press, and the device in the present embodiment may includes:
a combination module 1301 configured to combine two or more single-function buttons on a user interface of the touchscreen apparatus into one multifunction button;
a monitoring module 1302 configured to monitor a real-time touch operation performed by a user on the multifunction button;
a first determination module 1303 configured to determine the type of the touch operation according to time of the touch operation.

When the type of the touch operation is the second touch operation type, the adjustment submodule 1502 may specifically include:
a monitoring submodule 1601 configured to monitor whether the user performs a movement operation on the multifunction button;
an obtaining submodule 1602 configured to obtain a moved location after the multifunction button is moved when the user stops the movement operation, when a result of the monitoring module 1601 is yes;
a third determination submodule 1603 configured to determine a docking location of the multifunction button according to an area on the user interface where the moved location is located when the user stops the touch operation.

The second interaction submodule 1503 may be specifically configured to evenly unfold the two or more single-function buttons into an arc according to a preset radius in a user touch area around the docking location of the multifunction button, wherein distances between any two neighbouring single-function buttons of the two or more single-function buttons are equal and distances from the two or more single-function buttons to the multifunction button are equal.

In the present embodiment, the user may move the multifunction button to the left side, the middle or the right side of the bottom of the screen by long-pressing the multifunction button, such that the user may unfold the single-function buttons in a range convenient for the user to operate, which not only increases the utilization rate of the screen of the touchscreen apparatus but also improvises user experience.

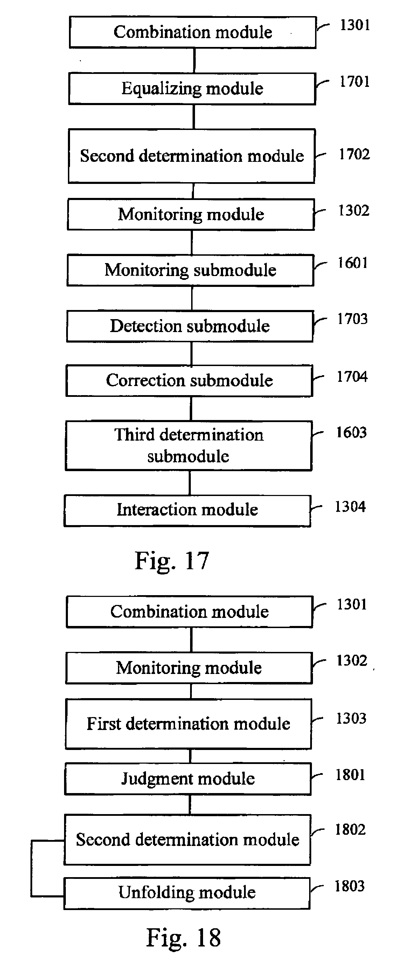

Fig. 17 shows a structure diagram of a third embodiment of a first device for user interface interaction applied to a touchscreen apparatus, a type of a touch operation is divided into a first touch operation type and a second touch operation type, wherein the second touch operation type is described to be a long-press, and the device in the present embodiment may include:
a combination module 1301 configured to combine two or more single-function buttons on a user interface of the touchscreen apparatus into one multifunction button;
an equalizing module 1701 configured to equalize a movable area of the multifunction button on the user interface into three subareas, wherein the movable area is a horizontal area located at the bottom of the touchscreen apparatus and a height of the horizontal area is a second preset threshold value;
a second determination module 1702 configured to determine center coordinate points of the three subareas;
a monitoring module 1302 configured to monitor a real-time touch operation performed by a user on the multifunction button.

A monitoring submodule 1601 configured to monitor whether the user performs a movement operation on the multifunction button;

When a result of the monitoring submodule 1601 is yes, in the present embodiment, the obtaining submodule 1602 may specifically include:
a detection submodule 1703 configured to detect whether the current multifunction button is beyond the movable area in a vertical direction during its movement;
a correction submodule 1704 configured to correct a vertical coordinate of a moved location after the multifunction button is moved to a second threshold value of the movable area, when a result of the detection submodule is yes, wherein a horizontal coordinate of the moved location is the same as a horizontal coordinate of the location of the multifunction button after it is moved;
a third determination submodule 1603 specifically configured to determine a docking location of the multifunction button as the center coordinate point of the current subarea according to the current subarea where the moved location is located.

An interaction module 1304 is configured to unfold the two or more single-function buttons one after another around the docking location of the multifunction button according to the type of the touch operation.

Fig. 18 shows a structure diagram of an embodiment of a second device for user interface interaction applied to a touchscreen apparatus, the device may include:
a combination module 1301 configured to combine two or more single-function buttons on a user interface of the touchscreen apparatus into one multifunction button;
a monitoring module 1302 configured to monitor a real-time touch operation performed by a user on the multifunction button;
a first determination module 1303 configured to determine a type of the touch operation according to time of the touch operation;
a judgment module 1801 configured to judge whether the type of the touch operation satisfies a preset condition to move the multifunction button;
a second determination module 1802 configured to determine a docking location of the multifunction button according to a movement operation performed by the user on the multifunction button, when a result of the judgment module is yes; and
an unfolding module 1803 configured to unfold the two or more single-function buttons one after another around the multifunction button, when the result of the judgment module is no.

Since the device embodiments basically correspond to the method embodiments, the related portions may refer to the description of the method embodiments. The above-described device embodiments are only illustrative, wherein the units that are described as separate parts may be or may be not physically separated, and the parts to be displayed as the units may be or may not be physical units, that is, they may be located in the same location or may be distributed in several network units. All or part of the modules may be selected to achieve the object of the solution of the present embodiment according to the actual need. Those skilled in the art may understand and implement the present embodiment without inventive labor.

An embodiment of the present invention further discloses a touchscreen apparatus which may include any one of the devices for user interface interaction as disclosed above.

It will be appreciated that the present invention may be used in many general purpose or dedicated computing systems, environments or configurations, for example, a personal computer, a server computer, a handheld apparatus or a portable apparatus, a tablet apparatus, a multiprocessor system, a microprocessor-based system, a set-top box, programmable consumer electronics, a network PC, a small-size computer, a mainframe computer and a distributed computing environment including any of the above systems or apparatuses, etc.

The present invention may be described in a general context of computer executable instructions such as program modules executed by a computer. Generally, the program modules include routines, programs, objects, components, data structures, etc., that perform specific tasks or realize specific abstract data type. The present invention may also be practiced in a distributed computing environment. In the distributed computing environment, the program modules may be located at storage mediums of the local or remote computer including storage devices.

It is explained that, in the context, relation terms such as "first" and "second" are only used to distinguish one entity or operation from another entity or operation, it is not necessary to imply or require actual such relationship or sequence between these entities or operations. Moreover, terms "including", "comprising" or any other variant mean to cover non-exclusive including, so that a process, a method, an article or a device including a series of elements not only includes those elements but also includes other elements that are not clearly listed, or further includes elements naturally possessed by the process, the method, the article, or the device. Without more limits, elements defined by the phase "including a ..." don't exclude the fact that the process, the method, the article or the device including the elements further includes other same elements.

The above mentioned are only detailed embodiments of the present invention, as claimed.

## Claims

1. A method for user interface interaction applied to a touchscreen apparatus comprising the steps of:
combining (301) the functions of the two or more single-function buttons (401) on a user interface of the touchscreen apparatus into one multifunction button (301), and displaying said one multifunction button instead of said two or more single-function buttons;
monitoring (302) a real-time touch operation performed by a user on the multifunction button; the method being **characterized by** the steps of:
determining (303) a type of the touch operation according to a length of time of the touch operation;
unfolding (304) the two or more single-function buttons (401) one after another in a user touch area around the multifunction button (301), when the type of the touch operation is determined to be of a first touch operation type;
adjusting a docking location of the multifunction button according to a dragging movement operation performed by the user on the multifunction button, and unfolding the two or more single-function buttons one after another in the user touch area around the docking location after the multifunction button is moved, when the type of the touch operation is determined to be of a second touch operation type.

2. The method according to claim 1, wherein, determining (303) the type of the touch operation according to the length of time of the touch operation specifically comprises:
judging (501) whether the length of time of the touch operation satisfies a preset condition of the first touch operation type, if it does, determining (502) the type of the touch operation as the first touch operation type; and if not, determining (503) the type of the touch operation as the second touch operation type.

3. The method according to claim 2, wherein, the first touch operation type is determined (303) as a short-press, the second touch operation type is a long-press, and the judging (501) whether the time of the touch operation satisfies the preset condition of the first touch operation type specifically comprises:
judging (601) whether the time of the touch operation is greater than a first predefined threshold value.

4. The method according to claim 1, wherein, the adjusting the docking location of the multifunction button (301) according to the movement operation performed by the user on the multifunction button specifically comprises:
monitoring (805) whether the user performs the movement operation on the multifunction button;
if the user does, obtaining (806) a moved location after the multifunction button is moved when the user stops the movement operation; and
determining (807) the docking location of the multifunction button according to an area on the user interface where the moved location is located when the user stops the touch operation.

5. The method according to claim 4, wherein, the method further comprises:
equalizing (1102) a movable area of the multifunction button (301) on the user interface into three subareas, wherein the movable area is a horizontal area located at the bottom of the touchscreen apparatus and a height of the horizontal area is a second preset threshold value;
determining (1103) center coordinate points of the three subareas;
the obtaining (806) the moved location after the multifunction button is moved specifically comprises:
detecting (1108) whether the current multifunction button is beyond the movable area in a vertical direction during its movement, if it is, correcting (1109) a vertical coordinate of the moved location after the multifunction button is moved to the second threshold value of the movable area, wherein a horizontal coordinate of the moved location is the same as a horizontal coordinate of the location of the multifunction button after it is moved; and
the determining (807) the docking location of the multifunction button according to the area on the user interface where the moved location is located specifically comprises:
determining (1110) the docking location of the multifunction button as the center coordinate point of the current subarea according to the current subarea where the moved location is located.

6. The method according to any of claims 1 to 5, wherein, the unfolding (304) the two or more single-function buttons one after another in the user touch area around the docking location after the multifunction button is moved specifically comprises:
evenly unfolding the two or more single-function buttons (401) into an arc according to a preset radius in the user touch area around the docking location of the multifunction button (301), wherein distances between any two neighbouring single-function buttons of the two or more single-function buttons are equal and distances from the two or more single-function buttons to the multifunction button are equal.

7. The method according to any one of claims 1 to 6, wherein, the multifunction button (301) is a semitransparent button.

8. The method according to claim 1, further comprising;
judging (1203) whether the type of the touch operation satisfies a preset condition to move the multifunction button, if it does, determining (1204) a docking location of the multifunction button according to a dragging movement operation performed by the user on the multifunction button; and if not, unfolding (1205) the two or more single-function buttons one after another around the multifunction button.

9. A device for user interface interaction applied to a touchscreen apparatus, , the device comprising:
a combination module (1301) configured to combine two or more single-function buttons (401) on a user interface of the touchscreen apparatus into one multifunction button (301), and to display said one multifunction button instead of said two or more single-function buttons;
a monitoring module (1302) configured to monitor a real-time touch operation performed by a user on the multifunction button; the device being **characterized by**:
a first determination module (1303) configured to determine a type of the touch operation according to a length of time of the touch operation;
a first interaction submodule (1501) configured to unfold the two or more single-function buttons one after another in a user touch area around the multifunction button, when the type of the touch operation is determined to be of first touch operation type;
an adjustment submodule (1502) configured to adjust a docking location of the multifunction button according to a dragging movement operation performed by the user on the multifunction button, when the type of the touch operation is determined to be of second touch operation type; and
a second interaction submodule (1503) configured to unfold the two or more single-function buttons one after another in the user touch area around the docking location after the multifunction button is moved.

10. The device according to claim 9, wherein the first determination module specifically comprises:
a first judgment submodule (1401) configured to judge whether the length of time of the touch operation satisfies a preset condition of the first touch operation type;
a first determination submodule (1402) configured to determine the type of the touch operation as the first touch operation type when a result of the judgment submodule (1401) is yes; and
a second determination submodule (1403) configured to determine the type of the touch operation as the second touch operation type when the result of the judgment submodule is no.

11. The device according to claim 10, wherein, the first touch operation type is a short-press, the second touch operation type is a long-press, and the first judgment submodule (1401) is specifically configured to:
judge whether the time of the touch operation is greater than a first predefined threshold value.

12. The device according to claim 9, wherein, the adjustment submodule (1502) specifically comprises:
a monitoring submodule (1601) configured to monitor whether the user performs the movement operation on the multifunction button;
an obtaining submodule (1602) configured to obtain a moved location after the multifunction button is moved when the user stops the dragging movement operation, in a case wherein a result of the monitoring module is yes; and
a third determination submodule (1603) configured to determine the docking location of the multifunction button according to an area on the user interface where the moved location is located when the user stops the touch operation.

13. The device according to claim 12, further comprising:
an equalizing module (1701) configured to equalize a movable area of the multifunction button on the user interface into three subareas, wherein the movable area is a horizontal area located at the bottom of the touchscreen apparatus and a height of the horizontal area is a second preset threshold value; and
a second determination module (1702) configured to determine center coordinate points of the three subareas;
correspondingly, the obtaining submodule (1602) specifically comprises:
a detection submodule (1703) configured to detect whether the current multifunction button is beyond the movable area in a vertical direction during its movement; and
a correction submodule (1704) configured to correct a vertical coordinate of the moved location after the multifunction button is moved to the second threshold value of the movable area, when a result of the detection submodule (1703) is yes, wherein a horizontal coordinate of the moved location is the same as a horizontal coordinate of the location of the multifunction button after it is moved;
correspondingly, the third determination submodule (1603) is specifically configured to determine the docking location of the multifunction button as the center coordinate point of the current subarea according to the current subarea where the moved location is located.

14. The device according to any of claims 9 to 13, wherein, either the first or the second interaction submodule (1501,1503) is specifically configured to evenly unfold the two or more single-function buttons (401) into an arc according to a preset radius in the user touch area around the docking location of the multifunction button (301), wherein distances between any two neighbouring single-function buttons of the two or more single-function buttons are equal and distances from the two or more single-function buttons to the multifunction button are equal.

15. The device according to claim 9, wherein the interaction module (1304) comprises;
a judgment module (1801) configured to judge whether the type of the touch operation satisfies a preset condition to move the multifunction button;
a second determination module (1802) configured to determine a docking location of the multifunction button according to a movement operation performed by the user on the multifunction button, when a result of the judgment module is yes; and
an unfolding module (1803) configured to unfold the two or more single-function buttons one after another around the multifunction button, when the result of the judgment module is no.

16. A touchscreen apparatus, **characterized by** comprising the device according to any one of claims 9 to 15.

17. A computer program, which when executing on a processor, performs the method according to any one of claims 1 to 8.

18. A computer program product stored on a computer usable medium, comprising computer-readable program means for causing the computer to implement the method according to any one of claims 1 to 8.

## Patentansprüche

1. Ein Verfahren zu einer auf ein Berührungsbildschirmgerät angewandten Benutzerschnittstelleninteraktion, das die Schritte umfasst von:
Kombinieren (301) der Funktionen der zwei oder mehr Einzelfunktionsdruckknöpfe (401) auf einer Benutzerschnittstelle des Berührungsbildschirmgerätes zu einem einzigen Multifunktionsdruckknopf (301), und Anzeigen des besagten einzigen Multifunktionsdruckknopfs anstelle der besagten zwei oder mehr Einzelfunktionsdruckknöpfe;
Überwachen (302) eines von einem Benutzer auf dem Multifunktionsdruckknopf ausgeführten Echtzeitberührungsvorganges; wobei das Verfahren **gekennzeichnet ist durch** die Schritte von:
Bestimmen (303) eines Typs des Berührungsvorganges entsprechend einer Länge an Zeit des Berührungsvorganges;
Entfalten (304) von zwei oder mehr Einzelfunktionsdruckknöpfen (401) einer nach dem anderen auf einer Benutzerberührungsfläche, um den Multifunktionsdruckknopf (301) herum, wenn der Typ des Berührungsvorganges bestimmt ist, ein erster Berührungsvorgangstyp zu sein;
Einstellen eines Koppelortes des Multifunktionsdruckknopfes entsprechend eines von dem Benutzer auf dem Multifunktionsdruckknopf ausgeführten Ziehbewegungsvorganges, und Entfalten der zwei oder mehr Einzelfunktionsdruckknöpfe einer nach dem anderen auf der Benutzerberührungsfläche, um den Koppelort herum, nachdem der Multifunktionsdruckknopf bewegt ist, wenn der Typ des Berührungsvorganges bestimmt ist, ein zweiter Berührungsvorgangstyp zu sein.

2. Das Verfahren nach Anspruch 1, wobei das Bestimmen (303) des Typs des Berührungsvorganges entsprechend der Länge an Zeit des Berührungsvorganges spezifisch umfasst:
Beurteilen (501), ob die Länge an Zeit des Berührungsvorganges einer vorbestimmten Bedingung des ersten Berührungsvorgangstyps genügt, wenn sie das tut, Bestimmen (502) des Typs des Berührungsvorganges als der erste Berührungsvorgangstyp; und wenn nicht, Bestimmen (503) des Typs des Berührungsvorganges als der zweite Berührungsvorgangstyp.

3. Das Verfahren nach Anspruch 2, wobei der erste Berührungsvorgangstyp als ein Kurzdruck bestimmt wird (303), der zweite Berührungsvorgangstyp ein Langdruck ist, und das Beurteilen (501), ob die Länge an Zeit des Berührungsvorganges der vorbestimmten Bedingung des ersten Berührungsvorgangstyps genügt, spezifisch umfasst:
Beurteilen (601), ob die Länge an Zeit des Berührungsvorganges größer ist als ein erster vordefinierter Schwellenwert.

4. Das Verfahren nach Anspruch 1, wobei das Einstellen des Koppelortes des Multifunktionsdruckknopfes (301) entsprechend des von dem Benutzer auf dem Multifunktionsdruckknopf ausgeführten Bewegungsvorganges spezifisch umfasst:
Überwachen (805), ob der Benutzer den Bewegungsvorgang auf dem Multifunktionsdruckknopf ausführt;
wenn der Benutzer das tut, Abrufen (806) eines bewegten Ortes, nachdem der Multifunktionsdruckknopf bewegt ist, wenn der Benutzer den Bewegungsvorgang stoppt; und
Bestimmen (807) des Koppelortes des Multifunktionsdruckknopfes entsprechend einer Fläche auf der Benutzerschnittstelle, wo der bewegte Ort angeordnet ist, wenn der Benutzer den Berührungsvorgang stoppt.

5. Das Verfahren nach Anspruch 4, wobei das Verfahren weiterhin umfasst:
Ausgleichen (1102) einer beweglichen Fläche des Multifunktionsdruckknopfes (301) auf der Benutzerschnittstelle in drei Unterflächen, wobei die bewegliche Fläche eine an dem Boden des Berührungsbildschirmgeräts angeordnete horizontale Fläche ist und eine Höhe der horizontalen Fläche einen zweiten vorbestimmten Schwellenwert aufweist;
Bestimmen (1103) von Mittenkoordinatenpunkten der drei Unterflächen;
wobei das Abrufen (806) des bewegten Ortes, nachdem der Multifunktionsdruckknopf bewegt ist, spezifisch umfasst:
Detektieren (1108), ob sich der laufende Multifunktionsdruckknopf jenseits der beweglichen Fläche in einer vertikalen Richtung während ihrer Bewegung befindet, wenn es so ist, Korrigieren (1109) einer vertikalen Koordinate des bewegten Ortes, nachdem der Multifunktionsdruckknopf auf den zweiten Schwellenwert der beweglichen Fläche bewegt ist, wobei eine horizontale Koordinate des bewegten Ortes die gleiche ist wie eine horizontale Koordinate des Ortes des Multifunktionsdruckknopfes, nachdem er bewegt ist; und
wobei das Bestimmen (807) des Koppelortes des Multifunktionsdruckknopfes entsprechend der Fläche auf der Benutzerschnittstelle, wo der bewegte Ort angeordnet ist, spezifisch umfasst:
Bestimmen (1110) des Koppelortes des Multifunktionsdruckknopfes als der Mittenkoordinatenpunkt der laufenden Unterfläche entsprechend der laufenden Unterfläche, wo der bewegte Ort angeordnet ist.

6. Das Verfahren nach irgendeinem der Ansprüche 1 bis 5, wobei das Entfalten (304) der zwei oder mehr Einzelfunktionsdruckknöpfe einer nach dem anderen auf der Benutzerberührungsfläche um den Koppelort herum, nachdem der Multifunktionsdruckknopf bewegt ist, spezifisch umfasst:
gleichmäßiges Entfalten der zwei oder mehr Einzelfunktionsdruckknöpfe (401) zu einem Bogen entsprechend einem vorbestimmten Radius auf der Benutzerberührungsfläche, um den Koppelort des Multifunktionsdruckknopfes (301) herum, wobei Abstände zwischen irgendwelchen zwei benachbarten Einzelfunktionsdruckknöpfen der zwei oder mehr Einzelfunktionsdruckknöpfe gleich sind und Abstände von den zwei oder mehr Einzelfunktionsdruckknöpfen zu dem Multifunktionsdruckknopf gleich sind.

7. Das Verfahren nach irgendeinem der Ansprüche 1 bis 6, wobei der Multifunktionsdruckknopf (301) ein halbtransparenter Druckknopf ist.

8. Das Verfahren nach Anspruch 1, das weiterhin umfasst;
Beurteilen (1203), ob der Typ des Berührungsvorganges einer vorbestimmten Bedingung genügt, den Multifunktionsdruckknopf zu bewegen, wenn es das tut, Bestimmen (1204) eines Koppelortes des Multifunktionsdruckknopfes entsprechend einem von dem Benutzer auf dem Multifunktionsdruckknopf ausgeführten Ziehbewegungsvorganges; und wenn nicht, Entfalten (1205) der zwei oder mehr Einzelfunktionsdruckknöpfe einer nach dem anderen um den Multifunktionsdruckknopf herum.

9. Eine Vorrichtung zu einer auf ein Berührungsbildschirmgerät angewandten Benutzerschnittstelleninteraktion, wobei die Vorrichtung umfasst:
ein Kombinationsmodul (1301), das eingerichtet ist, zwei oder mehr Einzelfunktionsdruckknöpfe (401) auf einer Benutzerschnittstelle des Berührungsbildschirmgerätes zu einem einzigen Multifunktionsdruckknopf (301) zu kombinieren, und den besagten einzigen Multifunktionsdruckknopf anstelle der besagten zwei oder mehr Einzelfunktionsdruckknöpfe anzuzeigen;
ein Überwachungsmodul (1302), das eingerichtet ist, einen von einem Benutzer auf dem Multifunktionsdruckknopf ausgeführten Echtzeitberührungsvorgang zu überwachen; wobei die Vorrichtung **gekennzeichnet ist durch**:
ein erstes Bestimmungsmodul (1303), das eingerichtet ist, einen Typ des Berührungsvorganges entsprechend einer Länge an Zeit des Berührungsvorganges zu bestimmen;
ein erstes Interaktionsuntermodul (1501), das eingerichtet ist, die zwei oder mehr Einzelfunktionsdruckknöpfe einer nach dem anderen auf einer Benutzerberührungsfläche um den Multifunktionsdruckknopf herum zu entfalten, wenn der Typ des Benutzungsvorganges bestimmt ist, ein erster Berührungsvorgangstyp zu sein;
ein Einstellungsuntermodul (1502), das eingerichtet ist, einen Koppelort des Multifunktionsdruckknopfes entsprechend einem von dem Benutzer auf dem Multifunktionsdruckknopf ausgeführten Ziehbewegungsvorgang einzustellen, wenn der Typ des Berührungsvorganges bestimmt ist, ein zweiter Berührungsvorgangstyp zu sein; und
ein zweites Interaktionsuntermodul (1503), das eingerichtet ist, die zwei oder mehr Einzelfunktionsdruckknöpfe einer nach dem anderen auf der Benutzerberührungsfläche um den Koppelort herum zu entfalten, nachdem der Multifunktionsdruckknopf bewegt ist.

10. Die Vorrichtung nach Anspruch 9, wobei das erste Bestimmungsmodul spezifisch umfasst;
ein erstes Beurteilungsuntermodul (1401), das eingerichtet ist, zu beurteilen, ob die Länge an Zeit des Berührungsvorganges einer vorbestimmten Bedingung des ersten Berührungsvorgangstyps genügt;
ein erstes Bestimmungsuntermodul (1402), das eingerichtet ist, den Typ des Berührungsvorganges als den ersten Berührungsvorgangstyp zu bestimmen, wenn ein Ergebnis des Beurteilungsuntermoduls (1401) ja ist; und
ein zweites Bestimmungsuntermodul (1403), das eingerichtet ist, den Typ des Berührungsvorganges als den zweiten Berührungsvorgangstyp zu bestimmen, wenn das Ergebnis des Beurteilungsuntermoduls nein ist.

11. Die Vorrichtung nach Anspruch 10, wobei der erste Berührungsvorgangstyp ein Kurzdruck, der zweite Berührungsvorgangstyp ein Langdruck, und das erste Beurteilungsuntermodul (1401) spezifisch eingerichtet ist, um:
zu beurteilen, ob die Länge an Zeit des Berührungsvorganges größer ist als ein erster vordefinierter Schwellenwert.

12. Die Vorrichtung nach Anspruch 9, wobei das Einstellungsuntermodul (1502) spezifisch umfasst:
ein Überwachungsuntermodul (1601), das eingerichtet ist, zu überwachen, ob der Benutzer den Bewegungsvorgang auf dem Multifunktionsdruckknopf ausführt;
ein Abrufuntermodul (1602), das eingerichtet ist, einen bewegten Ort, nachdem der Multifunktionsdruckknopf bewegt ist, abzurufen, wenn der Benutzer den Zielbewegungsvorgang stoppt, in einem Fall, wobei ein Ergebnis des Überwachungsmodules ja ist; und
ein drittes Bestimmungsuntermodul (1603), das eingerichtet ist, den Koppelort des Multifunktionsdruckknopfes entsprechend einer Fläche auf der Benutzerschnittstelle, wo der bewegte Ort angeordnet ist, zu bestimmen, wenn der Benutzer den Berührungsvorgang stoppt.

13. Die Vorrichtung nach Anspruch 12, die weiterhin umfasst:
ein Ausgleichsmodul (1701), das eingerichtet ist, eine bewegliche Fläche des Multifunktionsdruckknopfes auf der Benutzerschnittstelle in drei Unterflächen auszugleichen, wobei die bewegliche Fläche eine an dem Boden des Berührungsbildschirmgerätes angeordnete horizontale Fläche ist, und eine Höhe der horizontalen Fläche einen zweiten vorbestimmten Schwellenwert aufweist; und
ein zweites Bestimmungsmodul (1702), das eingerichtet ist, Mittenkoordinatenpunkte der drei Unterflächen zu bestimmen;
wobei entsprechend das Abrufuntermodul (1602) spezifisch umfasst:
ein Detektionsuntermodul (1703), das eingerichtet ist, zu detektieren, ob der laufende Multifunktionsdruckknopf sich jenseits der beweglichen Fläche in einer vertikalen Richtung während ihrer Bewegung befindet; und
ein Korrekturuntermodul (1704), das eingerichtet ist, eine vertikale Koordinate des bewegten Ortes, nachdem der Multifunktionsdruckknopf bewegt ist, auf den zweiten Schwellenwert der beweglichen Fläche zu korrigieren, wenn ein Ergebnis des Detektionsuntermoduls (1703) ja ist, wobei eine horizontale Koordinate des bewegten Ortes die gleiche ist wie eine horizontale Koordinate des Ortes des Multifunktionsdruckknopfes, nachdem er bewegt ist;
wobei entsprechend das dritte Bestimmungsuntermodul (1603) spezifisch eingerichtet ist, um den Koppelort des Multifunktionsdruckknopfes als den Mittenkoordinatenpunkt der laufenden Unterfläche entsprechend der laufenden Unterfläche zu bestimmen, wo der bewegte Ort angeordnet ist.

14. Die Vorrichtung nach irgendeinem der Ansprüche 9 bis 13, wobei entweder das erste oder das zweite Interaktionsuntermodul (1501, 1503) spezifisch eingerichtet ist, um gleichmäßig die zwei oder mehr Einzelfunktionsdruckknöpfe (401) zu einem Bogen entsprechend einem vorbestimmten Radius auf der Benutzerberührungsfläche um den Koppelort des Multifunktionsdruckknopfes (301) herum zu entfalten, wobei Abstände zwischen irgendwelchen zwei benachbarten Einzelfunktionsdruckknöpfen der zwei oder mehr Einzelfunktionsdruckknöpfe gleich sind und Abstände von den zwei oder mehr Einzelfunktionsdruckknöpfen zu dem Multifunktionsdruckknopf gleich sind.

15. Die Vorrichtung nach Anspruch 9, wobei das Interaktionsmodul (1304) umfasst;
ein Beurteilungsmodul (1801), das eingerichtet ist, zu beurteilen, ob der Typ des Berührungsvorganges einer vorbestimmten Bedingung genügt, um den Multifunktionsdruckknopf zu bewegen;
ein zweites Bestimmungsmodul (1802), das eingerichtet ist, einen Koppelort des Multifunktionsdruckknopfes entsprechend einem von dem Benutzer auf dem Multifunktionsdruckknopf ausgeführten Bewegungsvorgang zu bestimmen, wenn ein Ergebnis des Beurteilungsmodules ja ist; und
ein Entfaltungsmodul (1803), das eingerichtet ist, die zwei oder mehr Einzelfunktionsdruckknöpfe einer nach dem anderen um den Multifunktionsdruckknopf herum zu entfalten, wenn das Ergebnis des Beurteilungsmodules nein ist.

16. Ein Berührungsbildschirmgerät, das durch das Umfassen der Vorrichtung nach irgendeinem der Ansprüche 9 bis 15 gekennzeichnet ist.

17. Ein Computerprogramm, das, wenn es auf einem Prozessor ausgeführt wird, das Verfahren nach irgendeinem der Ansprüche 1 bis 8 ausführt.

18. Ein Computerprogrammprodukt, das auf einem computerverwendbaren Medium gespeichert ist, das computerlesbare Programmmittel umfasst, um zu bewirken, dass der Computer das Verfahren nach irgendeinem der Ansprüche 1 bis 8 implementiert.

## Revendications

1. Procédé d'interaction avec une interface utilisateur appliqué à un appareil à écran tactile, comprenant les étapes consistant à :
combiner (301) les fonctions d'au moins deux boutons à fonction unique (401) sur une interface utilisateur de l'appareil à écran tactile en un bouton multifonction (301), et afficher ledit bouton multifonction au lieu desdits au moins deux boutons à fonction unique ;
contrôler (302) une opération tactile en temps réel effectuée par un utilisateur sur le bouton multifonction ;
le procédé étant **caractérisé par** les étapes consistant à :
déterminer (303) un type de l'opération tactile en fonction d'une durée de l'opération tactile ;
déplier (304) lesdits au moins deux boutons à fonction unique (401), l'un après l'autre, dans une zone tactile d'utilisateur, autour du bouton multifonction (301), lorsqu'il est déterminé que le type de l'opération tactile est un premier type d'opération tactile ;
régler une position d'ancrage du bouton multifonction en fonction d'une opération de déplacement par glissement effectuée par l'utilisateur sur le bouton multifonction, et déplier lesdits au moins deux boutons à fonction unique, l'un après l'autre, dans la zone tactile d'utilisateur autour de la position d'ancrage après que le bouton multifonction a été déplacé, lorsqu'il est déterminé que le type de l'opération tactile est un second type d'opération tactile.

2. Procédé selon la revendication 1, dans lequel la détermination (303) du type de l'opération tactile en fonction de la durée de l'opération tactile comprend précisément les étapes consistant à :
évaluer (501) si la durée de l'opération tactile satisfait une condition préétablie du premier type d'opération tactile, dans l'affirmative, déterminer (502) le type de l'opération tactile comme étant le premier type d'opération tactile ; et dans la négative, déterminer (503) le type de l'opération tactile comme étant le second type d'opération tactile.

3. Procédé selon la revendication 2, dans lequel le premier type d'opération tactile est déterminé (303) comme étant une pression brève, le second type d'opération tactile est une pression longue, et l'étape consistant à évaluer (501) si la durée de l'opération tactile satisfait la condition préétablie du premier type d'opération tactile comprend précisément l'étape consistant à :
évaluer (601) si la durée de l'opération tactile est supérieure à une première valeur de seuil prédéfinie.

4. Procédé selon la revendication 1, dans lequel le réglage de la position d'ancrage du bouton multifonction (301) en fonction de l'opération de déplacement effectuée par l'utilisateur sur le bouton multifonction comprend précisément les étapes consistant à :
contrôler (805) si l'utilisateur effectue l'opération de déplacement sur le bouton multifonction ;
dans l'affirmative, obtenir (806) une position déplacée après que le bouton multifonction a été déplacé, lorsque l'utilisateur met fin à l'opération de déplacement ; et
déterminer (807) la position d'ancrage du bouton multifonction en fonction d'une zone de l'interface utilisateur où se situe la position déplacée, lorsque l'utilisateur met fin à l'opération tactile.

5. Procédé selon la revendication 4, le procédé comprenant en outre les étapes consistant à :
égaliser (1102) une zone mobile du bouton multifonction (301) sur l'interface utilisateur pour obtenir trois sous-zones, dans lequel la zone mobile est une zone horizontale située au bas de l'appareil à écran tactile et une hauteur de la zone horizontale est une seconde valeur de seuil préétablie ;
déterminer (1103) des points de coordonnées centraux des trois sous-zones ;
l'obtention (806) de la position déplacée après que le bouton multifonction a été déplacé comprend précisément l'étape consistant à :
détecter (1108) si le bouton multifonction actuel se situe au-delà de la zone mobile dans une direction verticale pendant son déplacement, dans l'affirmative corriger (1109) une coordonnée verticale de la position déplacée après que le bouton multifonction a été déplacé, en la réglant à la seconde valeur de seuil de la zone mobile, dans lequel une coordonnée horizontale de la position déplacée est identique à une coordonnée horizontale de la position du bouton multifonction après qu'il a été déplacé ; et
la détermination (807) de la position d'ancrage du bouton multifonction en fonction de la zone de l'interface utilisateur où se situe la position déplacée comprend précisément l'étape consistant à :
déterminer (1110) la position d'ancrage du bouton multifonction comme étant le point de coordonnée central de la sous-zone actuelle, en fonction de la sous-zone actuelle où se situe la position déplacée.

6. Procédé selon l'une quelconque des revendications 1 à 5, dans lequel le dépliage (304) lesdits au moins deux boutons à fonction unique, l'un après l'autre dans la zone tactile d'utilisateur autour de la position d'ancrage, après que le bouton multifonction a été déplacé, comprend précisément l'étape consistant à :
déplier uniformément lesdits au moins deux boutons à fonction unique (401) en un arc selon un rayon préétabli dans la zone tactile d'utilisateur autour de la position d'ancrage du bouton multifonction (301), les distances entre deux quelconques boutons à fonction unique voisins parmi lesdits au moins deux boutons à fonction unique sont égales et les distances entre lesdits au moins deux boutons à fonction unique et le bouton multifonction sont égales.

7. Procédé selon l'une quelconque des revendications 1 à 6, dans lequel le bouton multifonction (301) est un bouton semi-transparent.

8. Procédé selon la revendication 1, comprenant en outre l'étape consistant à :
évaluer (1203) si le type de l'opération tactile satisfait une condition préétablie pour déplacer le bouton multifonction, dans l'affirmative, déterminer (1204) une position d'ancrage du bouton multifonction en fonction d'une opération de déplacement par glissement effectuée par l'utilisateur sur le bouton multifonction ; et dans la négative, déplier (1205) lesdits ou au moins deux boutons à fonction unique, l'un après l'autre, autour du bouton multifonction.

9. Dispositif d'interaction avec une interface utilisateur appliqué à un appareil à écran tactile, le dispositif comprenant :
un module de combinaison (1301) conçu pour combiner au moins deux boutons à fonction unique (401) sur une interface utilisateur de l'appareil à écran tactile en un bouton multifonction (301), et pour afficher ledit bouton multifonction au lieu desdits au moins deux boutons à fonction unique ;
un module de contrôle (1302) conçu pour contrôler une opération tactile en temps réel effectuée par un utilisateur sur le bouton multifonction ;
le dispositif étant **caractérisé par** :
un premier module de détermination (1303) conçu pour déterminer un type de l'opération tactile en fonction d'une durée de l'opération tactile ;
un premier sous-module d'interaction (1501) conçu pour déplier lesdits au moins deux boutons à fonction unique, l'un après l'autre, dans une zone tactile d'utilisateur autour du bouton multifonction, lorsqu'il est déterminé que le type d'opération tactile est un premier type d'opération tactile ;
un sous-module de réglage (1502) conçu pour régler une position d'ancrage du bouton multifonction en fonction d'une opération de déplacement par glissement effectuée par l'utilisateur sur le bouton multifonction, lorsqu'il est déterminé que le type de l'opération tactile est un second type d'opération tactile ; et
un second sous-module d'interaction (1503) conçu pour déplier lesdits au moins deux boutons à fonction unique, l'un après l'autre, dans la zone tactile d'utilisateur autour de la position d'ancrage, après que le bouton multifonction a été déplacé.

10. Dispositif selon la revendication 9, dans lequel le premier module de détermination comprend précisément :
un premier sous-module d'évaluation (1401) conçu pour évaluer si la durée de l'opération tactile satisfait une condition préétablie du premier type d'opération tactile ;
un premier sous-module de détermination (1402) conçu pour déterminer le type de l'opération tactile comme étant le premier type d'opération tactile, lorsqu'un résultat du sous-module d'évaluation (1401) est oui ; et
un deuxième sous-module de détermination (1403) conçu pour déterminer le type de l'opération tactile comme étant le second type d'opération tactile, lorsque le résultat du sous-module d'évaluation est non.

11. Dispositif selon la revendication 10, dans lequel le premier type d'opération tactile est une pression brève, le second type d'opération tactile est une pression longue, et le premier sous-module d'évaluation (1401) est précisément conçu pour :
évaluer si la durée de l'opération tactile est supérieure à une première valeur de seuil prédéfinie.

12. Dispositif selon la revendication 9, dans lequel le sous-module de réglage (1502) comprend précisément :
un sous-module de contrôle (1601) conçu pour contrôler si l'utilisateur effectue l'opération de déplacement sur le bouton multifonction ;
un sous-module d'obtention (1602) conçu pour obtenir une position déplacée, après que le bouton multifonction a été déplacé, lorsque l'utilisateur met fin à l'opération de déplacement par glissement, dans le cas où un résultat du module de contrôle est oui ; et
un troisième module de détermination (1603) conçu pour déterminer la position d'ancrage du bouton multifonction en fonction d'une zone de l'interface utilisateur où se situe la position déplacée, lorsque l'utilisateur met fin à l'opération tactile.

13. Dispositif selon la revendication 12, comprenant en outre :
un module d'égalisation (1701) conçu pour égaliser une zone mobile du bouton multifonction sur l'interface utilisateur pour obtenir trois sous-zones, dans lequel la zone mobile est une zone horizontale située au bas de l'appareil à écran tactile et une hauteur de la zone horizontale est une seconde valeur de seuil préétablie ; et
un deuxième module de détermination (1702) conçu pour déterminer des points de coordonnées centraux des trois sous-zones ;
en conséquence, le sous-module d'obtention (1602) comprend précisément :
un sous-module de détection (1703) conçu pour détecter si le bouton multifonction actuel se situe au-delà de la zone mobile dans une direction verticale pendant son déplacement ; et
un sous-module de correction (1704) conçu pour corriger une coordonnée verticale de la position déplacée, après que le bouton multifonction a été déplacé, en la réglant à la seconde valeur de seuil de la zone mobile, lorsqu'un résultat du sous-module de détection (1703) est oui, dans lequel une coordonnée horizontale de la position déplacée est identique à une coordonnée horizontale de la position du bouton multifonction après qu'il a été déplacé ;
en conséquence, le troisième sous-module de détermination (1603) est précisément conçu pour déterminer la position d'ancrage du bouton multifonction comme étant le point de coordonnée central de la sous-zone actuelle, en fonction de la sous-zone actuelle où se situe la position déplacée.

14. Dispositif selon l'une quelconque des revendications 9 à 13, dans lequel le premier ou second sous-module d'interaction (1501, 1503) est précisément conçu pour déplier uniformément lesdits au moins deux boutons à fonction unique (401) en un arc selon un rayon préétabli, dans la zone tactile d'utilisateur autour de la position d'ancrage du bouton multifonction (301), dans lequel les distances entre deux quelconques boutons à fonction unique voisins parmi lesdits au moins deux boutons à fonction unique sont égales et les distance entre lesdits au moins deux boutons à fonction unique et le bouton multifonction sont égales.

15. Dispositif selon la revendication 9, dans lequel le sous-module d'interaction (1304) comprend :
un module d'évaluation (1801) conçu pour évaluer si le type de l'opération tactile satisfait une condition préétablie pour déplacer le bouton multifonction ;
un second module de détermination (1802) conçu pour déterminer une position d'ancrage du bouton multifonction en fonction d'une opération de déplacement effectuée par l'utilisateur sur le bouton multifonction, lorsqu'un résultat du module d'évaluation est oui ; et
un module de dépliage (1803) conçu pour déplier lesdits au moins deux boutons à fonction unique, l'un après l'autre, autour du bouton multifonction, lorsque le résultat du module d'évaluation est non.

16. Appareil à écran tactile, **caractérisé en ce qu'**il comprend le dispositif selon l'une quelconque des revendications 9 à 15.

17. Programme informatique qui, lorsqu'il s'exécute sur un processeur, exécute le procédé selon l'une quelconque des revendications 1 à 8.

18. Produit-programme informatique stocké sur un support utilisable par un ordinateur, comprenant des moyens formant programme lisible par ordinateur, destinés à faire que l'ordinateur mette en oeuvre le procédé selon l'une quelconque des revendications 1 à 8.
